# DEMANDE DE BREVET EUROPEEN

(11) **EP 4 838 107 A1**
(43) Date de publication de la demande: **11.11.2026**
(21) Numéro de dépôt: 26171176.6
(22) Date de dépôt: 08.04.2026
(51) Int. Cl.: F16D 65/02

(54) **SYSTEME DE CAISSON PIVOTANT POUR UNE BATTERIE DE TRACTION DE VEHICULE AUTOMOBILE**

(30) Priorité: 06.05.2025 FR 2504775
(71) Demandeur: Stellantis Auto SAS, 78300 Poissy (FR)
(72) Inventeur: LGATAA, LOUBNA, 20230 Casablanca (MA); SAMIR, Mohamed, 25000 Casablanca (MA)
(74) Mandataire: PSIP

(57) **Abrégé**

L'invention concerne un outillage (10) d'assemblage de plateau de frein (6) sur un pont rigide (1) automobile comportant un essieu porteur (2) avec un flasque d'extrémité (3) pour porter le plateau de frein (6), l'outillage (10) comporte un composant de maintien (11) maintenant provisoirement en position le plateau de frein (6) sur ce flasque (3) pendant le montage d'un arbre de transmission (7) dans l'essieu (2), le composant de maintien (11) comporte un étrier (12) avec des tenons (15) parallèles entre eux, répartis comme les alésages de guidage (4) du flasque d'extrémité (3) dudit essieu (2), ces tenons (15) sont dimensionnés pour être insérés avec jeu dans les alésages de guidage (4) et dans des perçages de passage du plateau de frein (6), l'invention concerne encore au moins un véhicule automobile avec cet outillage (10), et un procédé de montage de montage d'un ensemble pont (30) de véhicule automobile.

## Description

L'invention porte sur un outillage d'assemblage de plateau de frein sur un pont rigide de véhicule automobile.

L'invention porte encore sur un véhicule automobile équipé d'un tel outillage d'assemblage.

L'invention porte encore sur une flotte de véhicules automobiles comportant au moins un tel outillage d'assemblage.

L'invention porte encore sur un procédé de montage d'un arbre de transmission et d'un plateau de frein sur un pont rigide de véhicule automobile.

La plupart des véhicules automobiles comportent au moins un pont rigide, le plus souvent un pont arrière.

Un tel pont rigide comporte, de part et d'autre d'une coque sensiblement centrale, des essieux porteurs. Chaque essieu porteur comporte des moyens de fixation à un dispositif amortisseur, et, en partie distale, un flasque d'extrémité comportant des alésages de guidage. Cet essieu porteur renferme, coaxial selon une direction d'introduction, un arbre de transmission transversal, dit aussi arbre de roue, ou encore demi-arbre moteur quand ce pont rigide est un pont moteur; le pont rigide renferme alors, dans sa coque, un mécanisme de renvoi, comportant un couple démultiplicateur, notamment un couple conique, et un différentiel, ce mécanisme de renvoi est agencé pour transmettre le couple et la puissance émanant d'un moyen moteur, directement dans le cas d'un moyen moteur électrique, ou indirectement au travers d'une boîte de vitesses dans le cas d'un moyen moteur thermique.

Dans une variante particulière et très répandue, illustrée par les figures, chaque essieu porteur porte encore, en partie distale en appui sur son flasque d'extrémité, un plateau de frein statorique, qui est agencé pour coopérer avec un élément de freinage rotorique porté par une roue du véhicule, laquelle est fixée à l'arbre de transmission transversal, ou bien directement, ou bien indirectement par exemple au travers d'un cardan. L'arbre de transmission transversal est guidé par un roulement, et comporte un plateau d'arbre à l'opposé de la partie interne qui est insérée dans l'essieu porteur.

Le pont rigide est un des organes les plus lourds d'un véhicule automobile, notamment sur un véhicule 4x4 ou 4x6, ou encore un camion. Ce pont rigide est difficile à manipuler, ainsi que les autres composants qui sont montés sur lui, notamment des plateaux de freins, également lourds et encombrants. La manipulation est d'autant plus difficile que le véhicule est fortement dimensionné.

De ce fait, le montage des arbres de transmission et du plateau de frein devient plus complexe, nécessitant l'intervention de deux opérateurs au lieu d'un seul. En effet, il est délicat d'aligner correctement les moyens de fixation, notamment des vis, dont la tête prend appui sur le support de roulement, et dont le corps traverse le plateau de frein et le flasque d'extrémité, avant de fixer les écrous du côté intérieur du flasque d'extrémité. Cet alignement correct est indispensable pour un bon fonctionnement de l'ensemble.

Le risque de mauvais alignement entre le plateau et le pont rigide augmente, ce qui peut entraîner des erreurs ou des ajustements supplémentaires.

Le plateau de frein peut se déplacer ou tomber pendant le montage, ce qui peut causer des retards et des dommages aux composants.

Le processus de montage prend plus de temps, car il nécessite des étapes supplémentaires pour stabiliser et fixer le plateau de frein.

La charge de travail pour les opérateurs augmente, ce qui peut mener à une fatigue accrue et à des risques de blessure.

L'invention se propose de développer un outillage d'assemblage sur pont rigide, sous la forme d'un outillage léger, amovible et facile à manipuler, qui puisse assurer le bon positionnement relatif du support de roulement, du plateau de frein, et du flasque d'extrémité pendant le montage, tout en reprenant les efforts liés au champ de gravité. Ainsi, l'invention s'efforce de mettre à la disposition des ateliers d'assemblage initial comme des ateliers d'après-vente un dispositif innovant, peu coûteux pour le réseau d'après-vente, destiné à faciliter le montage des arbres de transmission et des plateaux de frein dans et sur un pont rigide, tout en assurant le maintien sécurisé du plateau de frein pendant l'assemblage.

L'invention concerne un dispositif innovant destiné à faciliter le montage du plateau des freins et des arbres de transmission dans un pont rigide, tout en assurant le maintien sécurisé du plateau de frein pendant l'assemblage. Ce dispositif est un outillage d'assemblage qui permet de résoudre deux problèmes courants rencontrés dans les processus d'assemblage : la difficulté à positionner correctement les arbres de transmission, et le risque que le plateau de frein tombe ou se déplace pendant le montage.

Il s'agit d'ajouter une pièce de maintien en position du plateau de frein lors du montage de l'arbre de transmission.

L'outillage d'assemblage selon l'invention comporte un étrier, comportant un profil intérieur agencé pour s'adapter, avec un faible jeu, au profil extérieur local de l'essieu porteur, au voisinage immédiat de son flasque d'extrémité. Cet étrier comporte une pluralité de tenons parallèles entre eux, répartis de la même façon que les alésages de guidage du flasque d'extrémité, de façon à coopérer avec eux lorsque l'étrier est rapproché du flasque d'extrémité selon la direction d'introduction, de préférence jusqu'en appui axial sur ce dernier.

En position d'utilisation, l'étrier, qui a la forme d'un U renversé, est positionné posé sur le pont rigide, puis déplacé selon la direction d'introduction vers le flasque d'extrémité, puis inséré dans les alésages de guidage de ce dernier.

Naturellement, la géométrie de cet outillage dépend de celle du pont rigide ; on comprend que son faible coût de réalisation permette sa duplication facile.

Le principe de l'outillage est tel qu'un atelier de réparation peut, avec des moyens classiques de fraisage, perçage et soudage, en réaliser un exemplaire adapté à chaque type de pont rigide à démonter ou à remonter.

L'objectif de la présente invention est de remédier à ces inconvénients en proposant un outillage simple garantissant la géométrie d'assemblage, la préservation des composants, et une grande facilité d'assemblage.

Pour atteindre cet objectif, l'invention propose un outillage pour l'assemblage d'un plateau de frein sur un pont rigide de véhicule automobile, ledit pont rigide comportant au moins un essieu porteur lequel comporte, en partie distale, un flasque d'extrémité comportant des alésages de guidage pour des moyens de fixation dudit plateau de frein, caractérisé en ce que ledit outillage d'assemblage comporte un composant de maintien qui est agencé pour le maintien provisoire en position dudit plateau de frein sur ledit flasque d'extrémité dudit pont rigide pendant le montage d'un arbre de transmission dans ledit essieu porteur selon une direction d'introduction.

Ainsi, l'invention concerne un outillage d'assemblage pour l'assemblage d'un plateau de frein sur un pont rigide de véhicule automobile, ledit pont rigide comportant au moins un essieu porteur lequel comporte, en partie distale, un flasque d'extrémité comportant des alésages de guidage pour des moyens de fixation dudit plateau de frein.

Grâce à l'invention, tout risque de chute du plateau de frein est écarté, l'opération de montage de l'arbre de transmission est sécurisée, et un opérateur seul peut effectuer cette opération de montage.

Avantageusement, ledit composant de maintien comporte un étrier, comportant un profil intérieur qui est agencé pour s'adapter avec jeu au profil extérieur local dudit essieu porteur, au voisinage immédiat de son dit flasque d'extrémité, et ledit étrier comporte une pluralité de tenons parallèles entre eux selon une direction de tenon, répartis de la même façon que lesdits alésages de guidage dudit flasque d'extrémité, et lesdits tenons sont dimensionnés pour être insérés avec jeu dans lesdits alésages de guidage dudit flasque d'extrémité et dans des perçages de passage que comporte ledit plateau de frein.

Cet outillage est ainsi facile à positionner et à maintenir sur le pont rigide, et ses tenons peuvent se substituer à des moyens de fixation tels que des vis pour le maintien provisoire du plateau de frein pendant l'insertion de l'arbre de transmission.

Avantageusement, ledit composant de maintien est une structure mécanosoudée en acier, calculée pour supporter l'effort et le couple dans la position de porte-à-faux maximal dudit plateau de frein, dudit arbre de transmission, et d'un ensemble de guidage en rotation dudit arbre de transmission comportant une platine portant au moins un roulement et comportant des orifices de guidage agencés pour recevoir des dits moyens de fixation en appui sur ladite platine.

Cette configuration garantit la sécurité de l'opérateur pendant le montage, ainsi que la préservation des différents composants.

Avantageusement, lesdits moyens de fixation sont dimensionnés pour être insérés avec jeu dans lesdits alésages de guidage dudit flasque d'extrémité et dans lesdits perçages de passage que comporte ledit plateau de frein.

L'insertion des différents composants est ainsi réalisable sans friction, et sans résistance à l'opérateur ou au manipulateur chargé de l'assemblage.

Avantageusement, ledit outillage d'assemblage comporte deux dits composants de maintien symétriques pour l'assemblage de dits plateaux de frein sur les extrémités opposées dudit pont rigide.

Ainsi l'assemblage complet d'un pont est facilement réalisable.

L'invention porte encore sur un véhicule automobile comportant au moins un ensemble pont comportant un pont rigide comportant au moins un essieu porteur lequel comporte, en partie distale, un flasque d'extrémité comportant des alésages de guidage pour des moyens de fixation d'un plateau de frein, ledit pont rigide comportant au moins un arbre de transmission insérable dans ledit essieu porteur selon une direction d'introduction, et un ensemble de guidage en rotation dudit arbre de transmission comportant une platine portant au moins un roulement et comportant des orifices de guidage agencés pour recevoir des moyens de fixation en appui sur ladite platine.

Selon l'invention, ledit véhicule automobile comporte au moins un tel outillage d'assemblage.

La maintenance de ce véhicule est ainsi facilitée.

L'invention porte encore sur une flotte de tels véhicules automobiles comportant au moins un tel outillage d'assemblage.

La maintenance de cette flotte est ainsi facilitée.

L'invention porte encore sur un procédé de montage d'un ensemble pont de véhicule automobile, ledit ensemble pont comportant un pont rigide comportant au moins un essieu porteur lequel comporte, en partie distale, un flasque d'extrémité comportant des alésages de guidage pour des moyens de fixation d'un plateau de frein, ledit pont rigide comportant au moins un arbre de transmission insérable dans ledit essieu porteur selon une direction d'introduction, et un ensemble de guidage en rotation dudit arbre de transmission comportant une platine portant au moins un roulement et comportant des orifices de guidage agencés pour recevoir des moyens de fixation en appui sur ladite platine.

Selon l'invention, dans une première étape, ledit plateau de frein est d'abord positionné sur ledit pont rigide, dans sa position théorique face au côté extérieur dudit flasque d'extrémité, avec des perçages de passage que comporte ledit plateau de frein sensiblement alignés avec lesdits alésages de guidage dudit flasque d'extrémité, dans une deuxième étape un dit composant de maintien d'un tel outillage d'assemblage est positionné dans une position initiale sur ledit pont rigide, pour le maintien provisoire en position dudit plateau de frein sur ledit flasque d'extrémité dudit pont rigide pendant le montage d'un arbre de transmission dans ledit essieu porteur selon une direction d'introduction, puis, dans une troisième étape, ledit arbre de transmission est équipé desdits moyens de fixation et inséré dans ledit pont rigide selon ladite direction d'introduction vers le côté intérieur dudit pont rigide, de façon à ce que lesdits moyens de fixation repoussent, selon ladite direction d'introduction et vers le côté intérieur du pont rigide, ledit composant de maintien pour le translater vers sa position initiale de ladite deuxième étape, et, dans une quatrième étape, après le dégagement dudit composant de maintien, lesdits moyens de fixation sont bloqués par des moyens de fixation complémentaire pour enserrer ensemble dans leur position de service ladite platine dudit roulement, ledit plateau de frein, et ledit flasque d'extrémité dudit pont rigide, et, dans une cinquième étape, ledit composant de maintien est démonté dudit pont rigide.

L'assemblage est ainsi fiabilisé et sécurisé.

Avantageusement, dans ladite deuxième étape un dit composant de maintien d'un outillage d'assemblage, est positionné dans une position initiale sur ledit pont rigide, avec ses dits tenons présentés avec ladite direction de tenon parallèle à ladite direction d'introduction, lesdits tenons saillants selon ladite direction d'introduction vers le côté extérieur dudit pont rigide, puis lesdits tenons sont insérés dans lesdits alésages de guidage correspondants dudit flasque d'extrémité, puis dans lesdits perçages de passage dudit plateau de frein, sous l'effet d'une translation dudit composant de maintien selon ladite direction d'introduction, vers le côté extérieur dudit pont rigide, pour le centrage dudit plateau de frein, puis, dans ladite troisième étape, ledit arbre de transmission équipé desdits moyens de fixation est inséré dans ledit pont rigide selon ladite direction d'introduction vers le côté intérieur dudit pont rigide, de façon à ce que lesdits moyens de fixation repoussent, selon ladite direction d'introduction et vers le côté intérieur du pont rigide, lesdits tenons dudit composant de maintien pour le translater vers sa position initiale de ladite deuxième étape.

Les alignements sont ainsi facilités en toute sécurité.

L'invention sera davantage détaillée par la description de modes de réalisation non limitatifs, et sur la base des figures annexées illustrant des variantes de l'invention, dans lesquelles :
- [Fig.1] illustre schématiquement et en perspective, un composant de maintien que comporte un outillage d'assemblage selon l'invention, avec des tenons parallèles entre eux, avec des entraxes correspondant aux entraxes des alésages d'un flasque d'extrémité de pont rigide, de ceux d'un plateau de frein, et de ceux d'une platine de support de guidage d'un arbre de transmission, ces tenons sont répartis autour d'un étrier de forme complémentaire à celle de l'essieu porteur que comporte le pont rigide au voisinage de son flasque d'extrémité;
- [Fig.2] illustre schématiquement et en perspective, un ensemble pont regroupant le pont rigide, le plateau de frein, la platine de support de guidage, et l'arbre de transmission; le plateau de frein est positionné face au flasque d'extrémité dans une première étape du procédé d'assemblage, et le composant de maintien selon [Fig.1] est déposé sur l'essieu porteur selon la flèche noire, avec ses tenons présentés face aux alésages du flasque d'extrémité, en début d'une deuxième étape du procédé d'assemblage;
- [Fig.3] illustre schématiquement, de façon similaire à [Fig.2], le même ensemble pont, et la fin de la deuxième étape du procédé d'assemblage avec les tenons du composant de maintien insérés à la fois dans le flasque d'extrémité et dans le plateau de frein par un mouvement selon la flèche noire; l'arbre de transmission équipé de son support de guidage et de moyens de fixation, ici des vis, commence à être inséré dans l'essieu porteur au début d'une troisième étape du procédé;
- [Fig.4] est un détail de la zone d'assemblage représentée en [Fig.3];
- [Fig.5] illustre schématiquement, de façon similaire à [Fig.4], sous un autre angle, le même ensemble pont, au début de la troisième étape du procédé, avec l'insertion de l'ensemble arbre de transmission selon la flèche noire;
- [Fig.6] illustre schématiquement, de façon similaire à [Fig.5], le même ensemble pont, à la fin de la troisième étape du procédé d'assemblage, quand les éléments de fixation, ou vis, ont traversé le plateau de frein et le flasque d'extrémité et repoussent selon la flèche noire les tenons du composant de maintien, lequel peut alors être déposé;

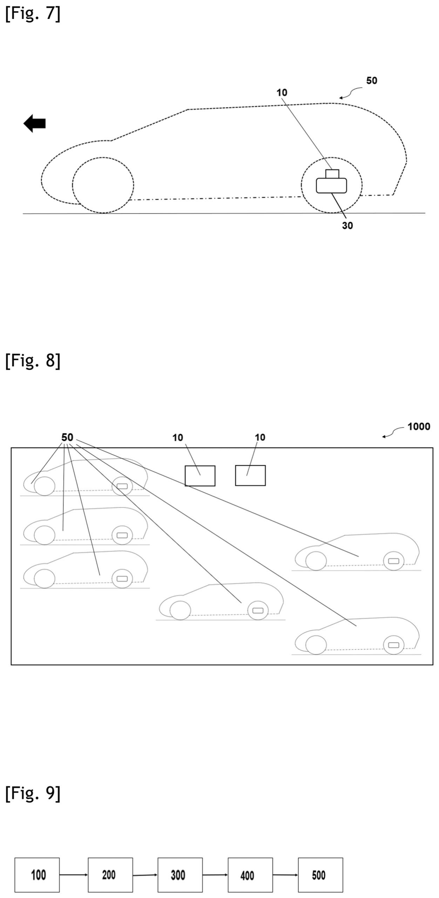

- [Fig.7] illustre schématiquement un véhicule automobile équipé d'un tel outillage d'assemblage au niveau d'un ensemble pont arrière;
- [Fig.8] illustre schématiquement une flotte de véhicules automobiles comportant des véhicules automobiles et de tels outillages d'assemblage;
- [Fig.9] est un schéma-blocs avec les étapes du procédé d'assemblage selon l'invention.

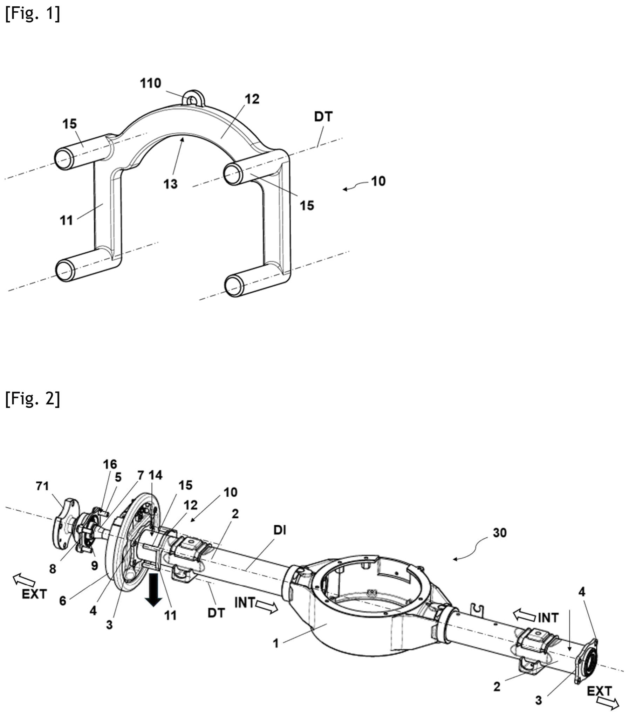

[Fig.1] illustre un outillage d'assemblage 10 pour l'assemblage d'un plateau de frein 6 sur un pont rigide 1 de véhicule automobile 50. Ce pont rigide 1 comporte au moins un essieu porteur 2 lequel comporte, en partie distale, un flasque d'extrémité 3 comportant des alésages de guidage 4 pour des moyens de fixation 5 de ce plateau de frein 6. [Fig.1] illustre le cas général mais non limitatif dans lequel le pont rigide 1 comporte deux essieux porteurs 2 alignés selon une même direction d'introduction DI.

Selon l'invention, cet outillage d'assemblage 10 comporte un composant de maintien 11 qui est agencé pour le maintien provisoire en position du plateau de frein 6 sur le flasque d'extrémité 3 du pont rigide 1 pendant le montage d'un arbre de transmission 7 dans l'essieu porteur 2 selon la direction d'introduction DI.

Plus particulièrement, dans une réalisation avantageuse illustrée en [Fig.1], le composant de maintien 11 comporte un étrier 12, comportant un profil intérieur 13 qui est agencé pour s'adapter avec jeu au profil extérieur local 14 de l'essieu porteur 2, au voisinage immédiat de son flasque d'extrémité 3; cet étrier 12 peut ainsi être posé sur l'essieu porteur 2 du pont rigide 1, sans basculer; plus particulièrement, le profil intérieur 13 est une surface femelle sensiblement cylindrique, et, plus particulièrement encore, ce profil intérieur 13 est encadré par deux tronçons latéraux, ici sensiblement plats, pour empêcher tout basculement. Et l'étrier 12 comporte une pluralité de tenons 15, qui sont parallèles entre eux selon une direction de tenon DT, et qui sont répartis de la même façon que les alésages de guidage 4 du flasque d'extrémité 3. Et ces tenons 15, ici au nombre de quatre dans le cas particulier non limitatif de [Fig.1], sont dimensionnés pour être insérés avec jeu dans les alésages de guidage 4 du flasque d'extrémité 3 et dans des perçages de passage que comporte le plateau de frein 6.

Compte tenu de la masse élevée d'un plateau de frein et d'un arbre de transmission équipé de son palier, le composant de maintien 11 est avantageusement une structure mécanosoudée en acier, calculée pour supporter l'effort et le couple dans la position de porte-à-faux maximal d'un ensemble constitué par le plateau de frein 6, l'arbre de transmission 7, et par un ensemble de guidage en rotation de l'arbre de transmission 7, quand cet ensemble repose sur le pont rigide 1 uniquement par les tenons 15 du composant de maintien 11; cet ensemble de guidage comporte une platine 8 portant au moins un roulement 9 et comportant des orifices de guidage 16 agencés pour recevoir des moyens de fixation 5, notamment des vis, en appui par leur tête sur la platine 8; l'arbre de transmission 7 comporte généralement, à l'opposé du pont rigide 1, une plaque de fixation 71 pour la fixation d'une roue. Ces moyens de fixation 5 sont dimensionnés pour être insérés avec jeu dans les alésages de guidage 4 du flasque d'extrémité 3 et dans les perçages de passage que comporte le plateau de frein 6; les moyens de fixation 5 sont agencés pour coopérer, après mise en place des constituants de l'ensemble, avec des moyens de fixation complémentaire tels que des écrous, non illustrés sur les figures.

Avantageusement, le composant de maintien 11 comporte, en partie supérieure, un accessoire de levage 110, tel qu'un crochet, une boucle, une patte, ou autre, agencé pour coopérer avec un moyen de levage tel qu'un pont roulant, une potence, ou encore un manipulateur robotisé tel qu'un robot. En particulier pour l'assemblage d'un ensemble pont de véhicule poids lourd, où les composants ont des masses importantes, le composant de maintien 11 est lui aussi fortement dimensionné, et des moyens d'assistance aux opérateurs sont souhaitables.

L'outillage d'assemblage 10 trouve une application avantageuse dans une installation robotisée comportant des moyens de manutention agencés pour manipuler un pont rigide 1 et le déposer sur un outillage d'assemblage, pour manipuler et déplacer le composant de maintien 11, le plateau de frein 6, et l'arbre de transmission 7 muni de son ensemble de guidage en rotation.

Plus particulièrement, l'outillage d'assemblage 10 comporte deux composants de maintien 11 symétriques pour l'assemblage de plateaux de frein 6 sur les extrémités opposées du pont rigide 1.

Selon la conception et la géométrie du pont rigide 1, un composant de maintien 11 unique peut dans certains cas être utilisé pour l'assemblage de plateaux de frein 6 sur les extrémités opposées du pont rigide 1 en as de symétrie.

L'invention concerne encore un véhicule automobile 50 comportant au moins un ensemble pont 30 comportant un pont rigide 1 comportant au moins un essieu porteur 2 lequel comporte, en partie distale, un flasque d'extrémité 3 comportant des alésages de guidage 4 pour des moyens de fixation 5 d'un plateau de frein 6. Ce pont rigide 1 comporte au moins un arbre de transmission 7 insérable dans l'essieu porteur 2 selon la direction d'introduction DI, et un ensemble de guidage en rotation de cet arbre de transmission 7; cet ensemble de guidage en rotation comporte une platine 8 portant au moins un roulement 9 et comportant des orifices de guidage 16 agencés pour recevoir des moyens de fixation 5 en appui sur la platine 8. Ce véhicule automobile 50 comporte au moins un tel outillage d'assemblage 10, qui peut faire partie d'un lot de bord chargé à bord du véhicule, ou stocké en concession ou chez l'utilisateur.

L'invention concerne encore une flotte 1000 de tels véhicules automobiles 50, cette flotte 1000 peut stocker, pour chaque type de véhicule ou de pont rigide 1, au moins un outillage d'assemblage 10 adapté, en dépôt dans le réseau d'après-vente ou/et chez les concessionnaires du constructeur.

La méthode de montage est simple grâce à l'outillage selon l'invention. Par convention, on distingue le côté intérieur INT du pont rigide 1, entre les deux flasques d'extrémité 3, et le côté extérieur EXT, au-delà de ces flasques d'extrémité 3.

Le procédé de montage d'un ensemble pont 30 de véhicule automobile 50 est décrit ci-après. Cet ensemble pont 30 comporte un pont rigide 1 comportant au moins un essieu porteur 2 lequel comporte, en partie distale, un flasque d'extrémité 3 comportant des alésages de guidage 4 pour des moyens de fixation 5 d'un plateau de frein 6, ce pont rigide 1 comportant au moins un arbre de transmission 7 insérable dans l'essieu porteur 2 selon une direction d'introduction DI, et un ensemble de guidage en rotation de l'arbre de transmission 7 comportant une platine 8 portant au moins un roulement 9 et comportant des orifices de guidage 16 agencés pour recevoir des moyens de fixation 5 en appui sur la platine 8.

Dans une première étape 100, tel que visible en [Fig.2], le plateau de frein 6 est d'abord positionné sur le pont rigide 1, dans sa position théorique face au côté extérieur EXT du flasque d'extrémité 3, avec des perçages de passage que comporte ce plateau de frein 6 sensiblement alignés avec les alésages de guidage 4 du flasque d'extrémité 3.

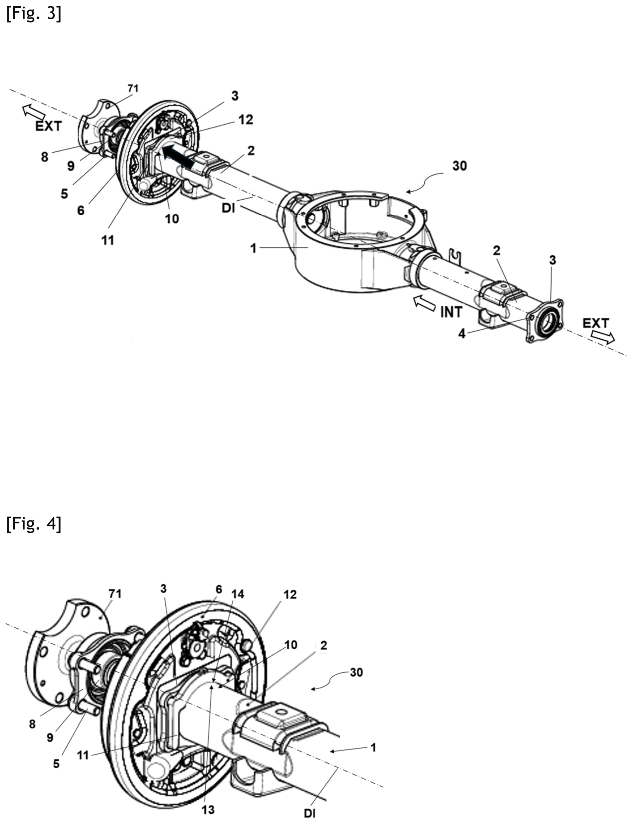

Dans une deuxième étape 200 tel que visible en [Fig.3], un composant de maintien 11 d'un tel outillage d'assemblage10 est positionné dans une position initiale sur le pont rigide 1, pour le maintien provisoire en position du plateau de frein 6 sur le flasque d'extrémité 3 du pont rigide 1 pendant le montage d'un arbre de transmission 7 dans l'essieu porteur 2 selon une direction d'introduction DI.

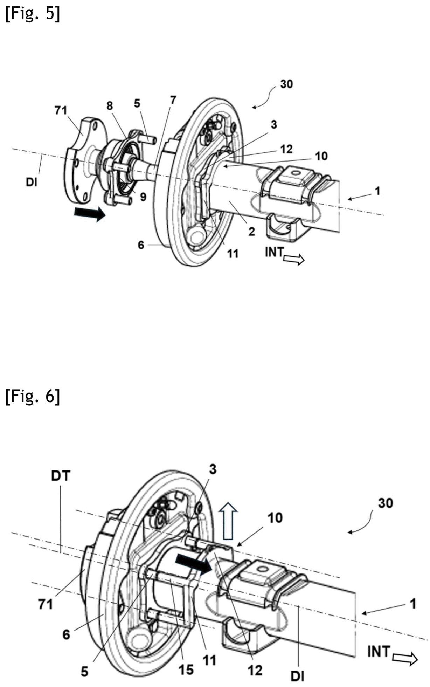

Puis, dans une troisième étape 300, l'arbre de transmission 7 est équipé des moyens de fixation 5 et inséré dans le pont rigide 1 selon la direction d'introduction DI vers le côté intérieur INT du pont rigide 1 tel que visible en [Fig.5], de façon à ce que les moyens de fixation 5 repoussent, selon la direction d'introduction DI et vers le côté intérieur INT du pont rigide, le composant de maintien 11 pour le translater vers sa position initiale de la deuxième étape 200, tel que visible en [Fig.6].

Dans une quatrième étape 400, après le dégagement du composant de maintien 11, les moyens de fixation 5 sont bloqués par des moyens de fixation complémentaire pour enserrer ensemble dans leur position de service la platine 8 du roulement 9, le plateau de frein 6, et le flasque d'extrémité 3 du pont rigide 1.

Et, dans une cinquième étape 500, le composant de maintien 11 est démonté du pont rigide 1.

Plus particulièrement, lors de l'utilisation du composant de maintien 11 particulier selon [Fig.1], dans la deuxième étape 200 ce composant de maintien 11 est positionné dans sa position initiale sur le pont rigide 1, avec ses tenons 15 présentés avec la direction de tenon DT parallèle à la direction d'introduction DI, les tenons 15 saillants selon la direction d'introduction DI vers le côté extérieur EXT du pont rigide 1 tel que visible en [Fig.2], puis les tenons 15 sont insérés dans les alésages de guidage 4 correspondants du flasque d'extrémité 3, puis dans les perçages de passage dudit plateau de frein 6, sous l'effet d'une translation du composant de maintien 11 selon la direction d'introduction DI, vers le côté extérieur EXT du pont rigide 1, pour le centrage du plateau de frein 6, tel que visible en [Fig.3].

Puis, dans la troisième étape 300, l'arbre de transmission 7 équipé des moyens de fixation 5 est inséré dans le pont rigide 1 selon la direction d'introduction DI vers le côté intérieur INT du pont rigide 1 tel que visible en [Fig.5], de façon à ce que les moyens de fixation 5 repoussent, selon la direction d'introduction DI et vers le côté intérieur INT du pont rigide, les tenons 15 du composant de maintien 11 pour le translater vers sa position initiale de la deuxième étape 200, tel que visible en [Fig.6].

En somme, lors du montage, dans une première étape, le plateau de frein est d'abord positionné sur le pont rigide, dans sa position théorique face au côté extérieur EXT du flasque d'extrémité, avec les alésages de fixation sensiblement alignés.

Dans une deuxième étape, l'opérateur se munit ensuite du composant de maintien, ce composant de maintien est positionné sur le pont rigide, avec ses tenons saillants selon la direction d'introduction, vers le côté extérieur EXT du pont rigide, ces tenons sont insérés dans les alésages correspondants du flasque d'extrémité, puis dans les alésages du plateau de frein, sous l'effet d'une translation du composant de maintien selon la direction d'introduction, vers le côté extérieur EXT du pont rigide; le plateau de frein est alors correctement centré par rapport au pont rigide grâce aux tenons du composant de maintien (par exemple quatre tenons de centrage dans la variante particulière et non limitative illustrée par les figures); ces tenons de maintien alignent avec précision les alésages de passage que comportent, d'une part le flasque d'extrémité du pont rigide, et d'autre part le plateau de frein. Ce système garantit un alignement parfait entre ces deux éléments.

Une fois le plateau de frein ainsi correctement centré, dans une troisième étape, l'arbre de transmission est inséré dans le pont rigide selon la direction d'introduction. L'arbre de transmission comporte, notamment mais non limitativement au niveau du support de roulement, une platine qui porte les moyens de fixation 5 (notamment des vis dans la version non limitative illustrée par les figures), dont une tête prend appui sur cette platine, notamment le support de roulement, et dont le corps traverse le plateau de frein et le flasque d'extrémité. Lors de cette insertion de l'arbre de transmission dans l'essieu du pont rigide, les moyens de fixation ou vis repoussent, selon la direction d'introduction et vers le côté intérieur INT du pont rigide, les tenons du composant de maintien, qui est ainsi translaté vers sa position initiale. Une fois ces tenons dégagés, les moyens de fixation sont bloqués dans une quatrième étape par des moyens de fixation complémentaire tels que des écrous, pour enserrer ensemble dans leur position de service la platine de roulement, le plateau de frein, et le flasque d'extrémité du pont rigide. Les moyens de fixation ou vis remplacent ainsi les tenons de centrage, et assurent une fixation solide et stable du plateau de frein sur le pont.

Ensuite, dans une cinquième étape, le composant de maintien est démonté, étant désormais inutile, car la fixation des composants est assurée par les moyens de fixation ou vis.

Ce processus permet non seulement de maintenir le plateau de frein en place pendant le montage, en évitant toute chute, mais aussi d'améliorer l'efficacité en réduisant le besoin d'une seconde personne et le temps consacré à l'assemblage.

Naturellement l'outillage selon l'invention est également utilisable pour la manœuvre inverse de démontage sécurisé de l'ensemble pont.

L'invention propose ainsi un dispositif innovant pour faciliter le montage du plateau de frein et des arbres de transmission dans un pont rigide, en assurant la stabilité du plateau durant l'assemblage.

Avantageusement le système comprend des tiges de centrage qui garantissent un alignement précis du plateau et du pont. Cela permet à un seul opérateur d'effectuer le montage, contrairement aux méthodes traditionnelles nécessitant deux personnes. Cette solution améliore la précision, minimise les risques de chute ou d'endommagement, et réduit les coûts de main-d'œuvre.

Cette invention permet de réduire le nombre d'opérateurs nécessaires pour le montage des arbres de transmission et des plateaux de frein dans et sur le pont rigide. En effet, grâce à sa conception pratique et fonctionnelle, un seul opérateur peut désormais effectuer l'ensemble du montage, contrairement aux méthodes traditionnelles nécessitant deux personnes. De plus, cette solution optimise le processus d'assemblage, réduisant considérablement le temps de montage, ce qui améliore l'efficacité globale de la production tout en diminuant les coûts associés à la main-d'œuvre.

Par exemple, l'opération de montage traditionnelle, effectuée par deux opérateurs, dure environ 10 minutes pour un pont rigide complet (avec un arbre de transmission et un plateau de frein de chaque côté). La mise en œuvre de l'invention permet de gagner environ 2 minutes sur l'opération. Pour une production annuelle de 40 000 véhicules, le gain de temps est alors de 80000 minutes, soient environ 1333 heures.

En somme, l'invention permet d'assurer une précision accrue grâce aux tenons de centrage, de réduire le nombre d'opérateurs lors du montage, d'assurer la stabilité du plateau de frein, de réduire les risques de chute, et d'éviter l'endommagement des composants, et, globalement, d'accélérer le processus de production tout en réduisant les coûts de main-d'œuvre et ceux liés à des erreurs de montage éventuelles, ce qui limite aussi les pertes liées à des reprises ou à des composants endommagés.

L'accélération du processus permet d'augmenter la productivité globale.

L'investissement initial lié à la fabrication des composants de maintien (un ou deux par pont rigide), de coût modeste, est vite compensé par des économies sur le long terme. Ce bas coût de revient de l'outillage permet aussi d'équiper le réseau d'après-vente et ainsi d'augmenter son efficacité.

L'amélioration de l'efficacité est liée à la réduction des temps d'arrêt et des coûts opérationnels.

L'optimisation du processus de montage, l'efficacité accrue en termes de temps et la réduction des besoins en main-d'œuvre caractérisent l'invention, dont le point fort de l'invention actuelle réside dans la réduction des coûts et des risques liés à l'assemblage, ce qui apporte un avantage économique et pratique pour la production.

Enfin, la solution est pérenne grâce à sa simplicité, sa compatibilité avec divers montages, et son adaptabilité aux évolutions technologiques et réglementaires.

## Revendications

1. Outillage d'assemblage (10) pour l'assemblage d'un plateau de frein (6) sur un pont rigide (1) de véhicule automobile (50), ledit pont rigide (1) comportant au moins un essieu porteur (2) lequel comporte, en partie distale, un flasque d'extrémité (3) comportant des alésages de guidage (4) pour des moyens de fixation (5) dudit plateau de frein (6), **caractérisé en ce que** ledit outillage d'assemblage (10) comporte un composant de maintien (11) qui est agencé pour le maintien provisoire en position dudit plateau de frein (6) sur ledit flasque d'extrémité (3) dudit pont rigide (1) pendant le montage d'un arbre de transmission (7) dans ledit essieu porteur (2) selon une direction d'introduction (DI).

2. Outillage d'assemblage (10) selon la revendication 1, **caractérisé en ce que** ledit composant de maintien (11) comporte un étrier (12), comportant un profil intérieur (13) qui est agencé pour s'adapter avec jeu au profil extérieur local (14) dudit essieu porteur (2), au voisinage immédiat de son dit flasque d'extrémité (3), et **en ce que** ledit étrier (12) comporte une pluralité de tenons (15) parallèles entre eux selon une direction de tenon (DT), répartis de la même façon que lesdits alésages de guidage (4) dudit flasque d'extrémité (3), et **en ce que** lesdits tenons (15) sont dimensionnés pour être insérés avec jeu dans lesdits alésages de guidage (4) dudit flasque d'extrémité (3) et dans des perçages de passage que comporte ledit plateau de frein (6).

3. Outillage d'assemblage (10) selon la revendication 1 ou 2, **caractérisé en ce que** ledit composant de maintien (11) est une structure mécanosoudée en acier, calculée pour supporter l'effort et le couple dans la position de porte-à-faux maximal dudit plateau de frein (6), dudit arbre de transmission (7), et d'un ensemble de guidage en rotation dudit arbre de transmission (7) comportant une platine (8) portant au moins un roulement (9) et comportant des orifices de guidage (16) agencés pour recevoir des dits moyens de fixation (5) en appui sur ladite platine (8).

4. Outillage d'assemblage (10) selon les revendications 2 et 3, **caractérisé en ce que** lesdits moyens de fixation (5) sont dimensionnés pour être insérés avec jeu dans lesdits alésages de guidage (4) dudit flasque d'extrémité (3) et dans lesdits perçages de passage que comporte ledit plateau de frein (6).

5. Outillage d'assemblage (10) selon l'une quelconque des revendications 1 à 4, **caractérisé en ce que** ledit outillage d'assemblage (10) comporte deux dits composants de maintien (11) symétriques pour l'assemblage de dits plateaux de frein (6) sur les extrémités opposées dudit pont rigide (1).

6. Véhicule automobile (50) comportant au moins un ensemble pont (30) comportant un pont rigide (1) comportant au moins un essieu porteur (2) lequel comporte, en partie distale, un flasque d'extrémité (3) comportant des alésages de guidage (4) pour des moyens de fixation (5) d'un plateau de frein (6), ledit pont rigide (1) comportant au moins un arbre de transmission (7) insérable dans ledit essieu porteur (2) selon une direction d'introduction (DI), et un ensemble de guidage en rotation dudit arbre de transmission (7) comportant une platine (8) portant au moins un roulement (9) et comportant des orifices de guidage (16) agencés pour recevoir des moyens de fixation (5) en appui sur ladite platine (8), **caractérisé en ce que** ledit véhicule automobile (50) comporte au moins un outillage d'assemblage (10) selon l'une quelconque des revendications 1 à 5.

7. Flotte (1000) de véhicules automobiles (50) selon la revendication 6, **caractérisée en ce que** ladite flotte (1000) comporte au moins un outillage d'assemblage (10) selon l'une quelconque des revendications 1 à 5.

8. Procédé de montage d'un ensemble pont (30) de véhicule automobile (50), ledit ensemble pont (30) comportant un pont rigide (1) comportant au moins un essieu porteur (2) lequel comporte, en partie distale, un flasque d'extrémité (3) comportant des alésages de guidage (4) pour des moyens de fixation (5) d'un plateau de frein (6), ledit pont rigide (1) comportant au moins un arbre de transmission (7) insérable dans ledit essieu porteur (2) selon une direction d'introduction (DI), et un ensemble de guidage en rotation dudit arbre de transmission (7) comportant une platine (8) portant au moins un roulement (9) et comportant des orifices de guidage (16) agencés pour recevoir des moyens de fixation (5) en appui sur ladite platine (8), **caractérisé en ce que**, dans une première étape (100), ledit plateau de frein (6) est d'abord positionné sur ledit pont rigide (1), dans sa position théorique face au côté extérieur (EXT) dudit flasque d'extrémité (3), avec des perçages de passage que comporte ledit plateau de frein (6) sensiblement alignés avec lesdits alésages de guidage (4) dudit flasque d'extrémité (3), dans une deuxième étape (200) un dit composant de maintien (11) d'un outillage d'assemblage (10) selon l'une quelconque des revendications 1 à 5 est positionné dans une position initiale sur ledit pont rigide (1), pour le maintien provisoire en position dudit plateau de frein (6) sur ledit flasque d'extrémité (3) dudit pont rigide (1) pendant le montage d'un arbre de transmission (7) dans ledit essieu porteur (2) selon une direction d'introduction (DI), puis, dans une troisième étape (300), ledit arbre de transmission (7) est équipé desdits moyens de fixation (5) et inséré dans ledit pont rigide (1) selon ladite direction d'introduction (DI) vers le côté intérieur (INT) dudit pont rigide (1), de façon à ce que lesdits moyens de fixation (5) repoussent, selon ladite direction d'introduction (DI) et vers le côté intérieur (INT) du pont rigide, ledit composant de maintien (11) pour le translater vers sa position initiale de ladite deuxième étape (200), et, dans une quatrième étape (400), après le dégagement dudit composant de maintien (11), lesdits moyens de fixation (5) sont bloqués par des moyens de fixation complémentaire pour enserrer ensemble dans leur position de service ladite platine (8) dudit roulement (9), ledit plateau de frein (6), et ledit flasque d'extrémité (3) dudit pont rigide (1), et, dans une cinquième étape (500), ledit composant de maintien (11) est démonté dudit pont rigide (1).

9. Procédé de montage selon la revendication 8, **caractérisé en ce que**, dans ladite deuxième étape (200) un dit composant de maintien (11) d'un outillage d'assemblage (10) selon la revendication 2 ou selon l'une des revendications 3 à 5 prise en combinaison avec la revendication 2, est positionné dans une position initiale sur ledit pont rigide (1), avec ses dits tenons (15) présentés avec ladite direction de tenon (DT) parallèle à ladite direction d'introduction (DI), lesdits tenons (15) saillants selon ladite direction d'introduction (DI) vers le côté extérieur (EXT) dudit pont rigide (1), puis lesdits tenons (15) sont insérés dans lesdits alésages de guidage (4) correspondants dudit flasque d'extrémité (3), puis dans lesdits perçages de passage dudit plateau de frein (6), sous l'effet d'une translation dudit composant de maintien (11) selon ladite direction d'introduction (DI), vers le côté extérieur (EXT) dudit pont rigide (1), pour le centrage dudit plateau de frein (6), puis, dans ladite troisième étape (300), ledit arbre de transmission (7) équipé desdits moyens de fixation (5) est inséré dans ledit pont rigide (1) selon ladite direction d'introduction (DI) vers le côté intérieur (INT) dudit pont rigide (1), de façon à ce que lesdits moyens de fixation (5) repoussent, selon ladite direction d'introduction (DI) et vers le côté intérieur (INT) du pont rigide, lesdits tenons (15) dudit composant de maintien (11) pour le translater vers sa position initiale de ladite deuxième étape (200).
